Europäisches Patentamt

European Patent Office

Office européen des brevets

(19)

(11) Numéro de publication: **0 203 845**
**B1**

(12) **FASCICULE DE BREVET EUROPEEN**

(45) Date de publication du fascicule du brevet:
**02.08.89**

(51) Int. Cl.⁴: **B62D 1/18**

(21) Numéro de dépôt: **86401023.6**

(22) Date de dépôt: **13.05.86**

(54) Dispositif de liaison séparable, notamment pour colonne de direction pour véhicule automobile.

(30) Priorité: **23.05.85 FR 8507792**

(43) Date de publication de la demande:
**03.12.86 Bulletin 86/49**

(45) Mention de la délivrance du brevet:
**02.08.89 Bulletin 89/31**

(84) Etats contractants désignés:
**DE GB IT NL SE**

(56) Documents cités:
**DE-A- 1 927 173**
**FR-A- 1 572 812**
**FR-A- 2 118 275**
**GB-A- 1 174 540**
**US-A- 3 760 649**
**US-A- 4 156 372**

(73) Titulaire: **NACAM Société dite:, Route de Blois,
F-41100 Vendome(FR)**

(72) Inventeur: **Haldric, Bernard, 15 Charles Lindbergh,
F-41100 Vendome(FR)**
Inventeur: **Benedi, Grégorio, 6 bis rue du 20ème
Chasseur, F-41100 Vendome(FR)**
Inventeur: **Baudon née Chardon, Sylvie, 3 rue Edgar
Degas, Naveil F-41100 Vendome(FR)**

(74) Mandataire: **Polus, Camille et al, c/o Cabinet
Lavoix 2, Place d'Estienne d'Orves, F-75441 Paris
Cedex 09(FR)**

# Description

La présente invention est relative aux colonnes de transmission et se rapporte plus particulièrement aux colonnes de direction pour véhicules automobiles, séparables en cas de choc.

Lorsqu'un véhicule automobile subit un choc frontal, le volant porté par la colonne de direction a tendance à être déplacé dans l'habitacle du véhicule en direction du conducteur.

Afin d'éviter ce déplacement du volant mettant le conducteur en danger, on a proposé diverses solutions.

A cet effet, on a réalisé des colonnes de direction dont une partie est formée d'un tube à ondes susceptible de se déformer sous l'effet d'un choc, par compression des ondes.

L'inconvénient d'un tel agencement est qu'il présente une longueur résiduelle non négligeable même lorsque les ondes du tube ont été comprimées jusqu'à devenir jointives.

On a également essayé d'utiliser des dispositifs télescopiques formés d'un arbre déplaçable dans un tube, l'effort de rétraction étant obtenu par le frottement de l'arbre dans le tube soit directement par le contact métal-métal, soit par l'intermédiaire d'un insert en matière plastique disposé entre l'arbre et le tube.

Le dispositif télescopique a lui aussi l'inconvénient de présenter une longueur résiduelle égale à la longueur du tube lorsque l'arbre est totalement engagé dans celui-ci.

On a aussi pensé à employer une colonne de direction dont une partie est déformable sous l'effet d'un choc frontal.

Dans cette solution encore, on se trouve en présence d'un problème de longueur résiduelle de la colonne, laissant subsister un certain risque de recul du volant.

On a enfin proposé de rendre la colonne de direction séparable en cas de choc.

A cet effet, on a relié deux tronçons d'une colonne de direction au moyen de deux flasques portés chacun par un tronçon et réunis entre eux par deux axes rendus solidaires de l'un des flasques et montés à coulissement axial dans des orifices ménagés dans l'autre flasque.

Le document FR-A 2 118 275 propose une solution de ce genre où chaque flasque ne porte qu'un type d'éléments d'accouplement, des éléments mâles, qui sont en prise avec des éléments d'accouplement femelles correspondant qui sont portés par un organe élastique intermédiaire placé à distance entre les deux flasques en vis-à-vis et servant uniquement d'amortisseur.

L'invention vise à améliorer la technique des colonnes de direction séparables sous l'effet d'un choc en créant une colonne de direction de ce type dont les pièces assurant la liaison séparable des deux tronçons de la colonne sont plus faciles à réaliser et présentent un encombrement réduit.

L'invention a pour but de construire un dispositif de liaison séparable, notamment pour colonne de direction de véhicule automobile qui comprend le nombre minimum minimorum de composants et où, en outre l'effort nécessaire pour provoquer le désaccouplement en cas de choc résulte d'un glissement contrôlé relatif des éléments mâles et femelles en prise.

Elle a donc pour objet un dispositif de liaison séparable du genre de celui exposé dans le préambule de la revendication 1 connu de FR-A 2 118 275 et dont les particularités ressortent notamment de la partie caractérisante de celle-ci.

L'invention sera mieux comprise à l'aide de la description qui va suivre, donnée uniquement à titre d'exemple et faite en se référant aux dessins annexés, sur lesquels:

– la Fig. 1 est une vue en élévation d'une portion de colonne de direction séparable en cas de choc suivant l'invention;
– la Fig.2 est une coupe suivant la ligne 2-2 de la Fig.1; et
– la Fig.3 est une coupe suivant la ligne 3-3 de la Fig.2.

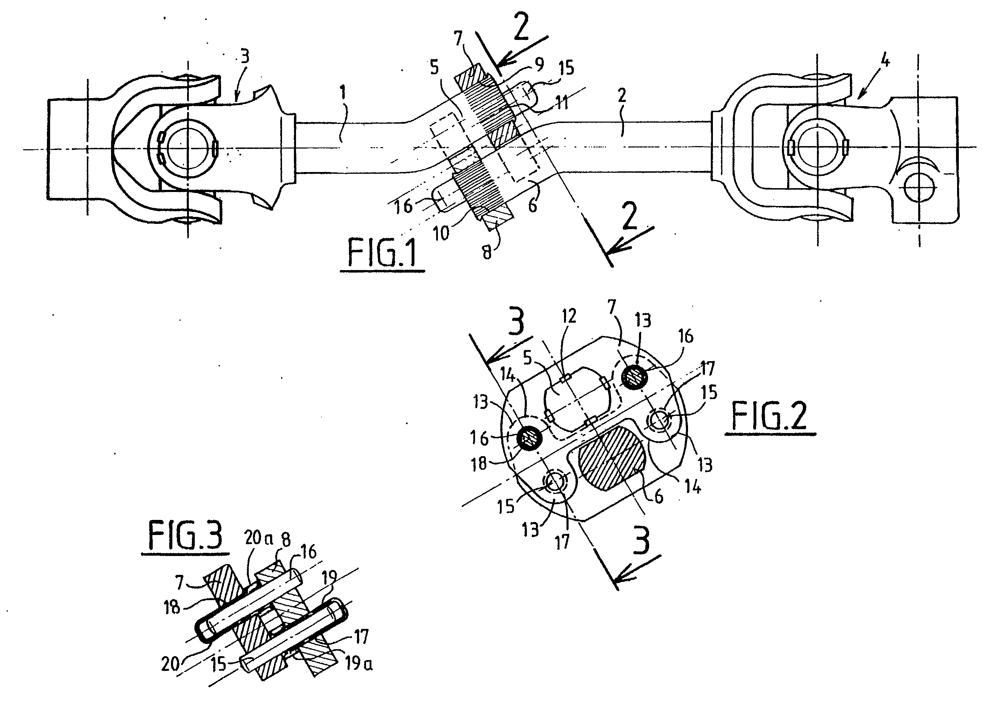

Sur la Fig.1, on a représenté une portion intermédiaire d'une colonne de direction formée de deux tronçons d'arbre 1,2 fixés chacun à un joint de cardan correspondant 3,4 de liaison au reste de la colonne de direction.

Chaque tronçon d'arbre 1,2 comporte une portion d'extrémité 5,6 opposée au joint de cardan 3,4 correspondant pliée de façon à faire un angle prédéterminé avec l'axe général de la portion de colonne de direction considérée.

Les portions d'extrémité 5,6 se recouvrent et portent chacune un flasque 7,8 fixé à la portion d'extrémité correspondante par l'intermédiaire d'un orifice 9, 10 ménagé dans chaque flasque.

Les orifices 9, 10 ont une forme complémentaire à celle des portions d'extrémité 5,6 engagées dans ceux-ci.

Lesdites portions d'extrémités 5,6 présentent avantageusement une surface cannelée 11 et les flasques 7,8 sont fixés sur les portions d'extrémité par matage en bout d'arbre comme représenté en 12 sur la Fig.2.

Chaque flasque 7,8 comporte deux saillies latérales 13 qui délimitent entre elles un évidement 14 pour le passage de la portion d'extrémité à laquelle est fixé l'autre flasque.

Dans chaque saillie 13 de chaque flasque 7,8 sont fixés, par exemple, par sertissage des axes de liaison 15,16. Ces axes de liaison sont engagés à coulissement axial dans des trous 17,18 correspndants mènagés dans l'autre flasque.

Les axes de liaison 15,16 sont montés dans les trous 17,18 correspondants par l'intermédiaire de douilles 19,20 en matériau de friction, par exemple en matière plastique rigide pourvues chacune d'un rebord épaulé 19a, 20a formant entretoise pour définir la distance entre les flasques 7,8 en position montée.

Les flasques 7 et 8 sont de forme identique et sont montés dans une configuration symétrique par rapport à l'axe de la portion de colonne considérée. Les quatre axes de liaison 15,16 sont avantageusement réalisés de faible diamètre, ce qui les rend déformables afin d'éviter les ruptures brutales.

L'ensemble ainsi constitué permet d'assurer un maintien rigide des tronçons d'arbre 1,2 et de transmettre le couple de direction.

Si l'on souhaite que le dispositif de liaison constitue une articulation permettant des petits déplacements angulaires des tronçons d'arbre l'un par rapport à l'autre, les douilles 19, 20 peuvent être réalisées en un élastomère approprié.

En cas de choc créant un effort de compression sur la colonne de direction, les flasques 7,8 sont soumis, par l'intermédiaire des tronçons d'arbre 1,2 à un effort qui tend à les écarter.

Les douilles 19,20 en matière plastique assurent sur les axes de liaison ou aiguilles 15,16, un serrage qui permet un effort de glissement contrôlé des axes de liaison.

Les flasques 7,8 sont donc déplacés à partir d'un seuil d'effort et le déplacement est assuré avec un effort contrôlé.

Lorsque les axes de liaison 15,16 sont totalement dégagés des orifices 17,18 des flasques dans lesquels ils sont normalement engagés, les deux tronçons d'arbre 1,2 sont libérés l'un par rapport à l'autre.

La colonne de direction peut donc subir un raccourcissement qui peut aller jusqu'à la venue en contact des joints de cardan 3,4.

Si les éléments de la carrosserie le permettent, le d éplacement peut même être plus important.

Le système qui vient d'être décrit est de conception simple.

En raison de sa configuration symétrique, il fait appel à des pièces identiques associées à chaque tronçon d'arbre, ce qui réduit le coût de fabrication de l'ensemble.

Il est en outre d'un encombrement réduit par rapport aux systèmes connus de ce type.

La réduction de l'encombrement est en outre due à l'utilisation d'un nombre important d'axes de liaison 15,16 de diamètre relativement réduit, disposés symétriquement par rapport à l'axe général du tronçon de colonne de direction considéré.

Dans le mode de réalisation qui vient d'être décrit, les portions d'extrémités de chaque tronçon d'arbre font un angle avec l'axe général de la portion de colonne de direction. Il en résulte que les flasques 7,8 portés par chaque tronçon sont disposés obliquement par rapport à l'axe de la colonne et donc de l'effort de séparation engendré en cas de choc, ce qui facilite encore la séparation des tronçons d'arbre.

On peut également envisager d'utiliser le même montage pour assembler des tronçons d'arbre dont l'un au moins présente une portion d'extrémité pliée de façon à être parallèle au tronçon d'arbre dont elle fait partie. L'autre tronçon d'arbre peut alors être soit rectiligne soit présenter une portion d'extrémité pliée de la même manière.

La rigidité de la liaison assurée par les flasques et les axes de liaison, lorsque ceux-ci sont montés dans les flasque par l'intermédiaire de douilles en matière plastique rigide, permet de disposer cet ensemble en tout endroit de la colonne de direction et en particulier entre deux joints de cardan.

## Revendications

1. Dispositif de liaison séparable entre deux tronçons d'arbres (12) coaxiaux qui présentent deux portions d'extrémités (5, 6) décalées par rapport à leur axe géométrique commun et se recouvrant et qui portent chacun un flasque (7, 8) unique fixé sur sa portion d'extrémité décalée, où ces flasques sont identiques et reliés l'un à l'autre par des axes de liaison séparables (15, 16), caractérisé en ce que les flasques (7, 8) portent à la fois les axes de liaison (15, 16) et les trous (17, 18) complémentaires, ces derniers étant équipés de douilles (19, 20) en matériau de friction destinées à recevoir à coulissement les axes de liaison (15, 16), et en ce que les flasques (7, 8) sont agencés de manière que les axes de liaison (15, 16) d'un flasque sont engagés dans les douilles (19, 20) des trous (17, 18) de l'autre flasque pour produire un effort de glissement contrôlé.

2. Dispositif de liaison selon la revendication 1, caractérisé en ce que l'une au moins des portions d'extrémités (5, 6) décalées est incliné sur leur axe géométrique commun et en ce que les flasques (7, 8) sont fixés sur ces extrémités (5, 6) de manière à être disposés obliquement par rapport à l'axe géométrique commun.

3. Dispositif de liaison suivant la revendication 1 ou 2, caractérisé en ce que les douilles (19, 20) sont réalisées en matière plastique rigide.

4. Dispositif de liaison suivant la revendication 1 ou 2, caractérisé on ce que les douilles (19, 20) sont réalisées en élastomère.

5. Dispositif de liaison suivant l'une des revendications 1 à 4, caractérisé en ce que l'un au moins des tronçons d'arbre présente une portion d'extrémité pliée de façon à être parallèle au tronçon d'arbre dont elle fait partie.

6. Dispositif de liaison suivant l'une quelconque des revendications 1 à 5, caractérisé en ce que chaque flasque (7, 8) est pourvu d'un orifice (9, 10) dans lequel est engagée la portion d'extrémité (5, 6) du tronçon d'arbre correspondant et en ce qu'il comporte deux saillies latérales (13) qui délimitent entre elles un évidement (14) pour le passage de la portion d'extrémité (5, 6) à laquelle est fixée l'autre flasque (8, 7).

7. Dispositif de liaison suivant la revendication 6, caractérisé en ce que lesdits axes de liaison (15, 16) sont fixés chacun dans une saillie latérale (13) de chaque flasque (7, 8).

8. Dispositif de liaison suivant l'une quelconque des revendications 1 à 7, caractérisé en ce que l'un au moins des flasques (7, 8) est monté incliné sur la portion d'extrémité (5, 6) à laquelle il est fixé.

9. Dispositif de liaison suivant l'une quelconque des revendications 1 à 8, caractérisé en ce que les axes de liaison (15, 16) sont engagés serrés dans les douilles (19, 20).

10. Application du dispositif de liaison séparable suivant l'une quelconque des revendications 1 à 9, à une colonne de direction pour véhicule automobile.

## Patentansprüche

1. Verbindungseinrichtung, die zwei koaxiale Wellenstücke (1, 2) lösbar miteinander verbindet, wobei die Wellenstücke zwei in bezug auf ihre gemeinsame geometrische Achse versetzte und sich überlappende Endabschnitte (5, 6) aufweisen und jeweils einen einzigen, am versetzten Endabschnitt befestigten Flansch (7, 8) tragen und wobei die Flansche identisch sind und der eine am anderen mittels lösbarer Verbindungsbolzen (15, 16) befestigt ist, dadurch gekennzeichnet, daß die Flansche (7, 8) zugleich die Verbindungsbolzen (15, 16) und komplementäre Bohrungen (17, 18) tragen, wobei die Bohrungen (17, 18) mit aus einem Reibungsmaterial hergestellten Buchsen (19, 29) versehen sind, die die Verbindungsbolzen (15, 16) gleitend aufnehmen, und daß die Flansche (7, 8) so angeordnet sind, daß die Verbindungsbolzen (15, 16) eines Flansches mit den Buchsen (19, 20) der Bohrungen (17, 18) des anderen Flansches in Eingriff sind, um eine kontrollierte Gleitbeanspruchung zu erzeugen.

2. Verbindungseinrichtung gemäß Anspruch 1, dadurch gekennzeichnet, daß wenigstens einer der versetzten Endabschnitte (5, 6) gegenüber deren gemeinsamer geometrischer Achse geneigt ist und daß die Flansche (7, 8) so auf den Endabschnitten (5, 6) befestigt sind, daß sie in bezug auf die gemeinsame geometrische Achse in Schräglage sind.

3. Verbindungseinrichtung gemäß Anspruch 1 oder 2, dadurch gekennzeichnet, daß die Buchsen (19, 20) aus Hartplastik hergestellt sind.

4. Verbindungseinrichtung gemäß Anspruch 1 oder 2, dadurch gekennzeichnet, daß die Buchsen (19, 20) aus einem Elastomer hergestellt sind.

5. Verbindungseinrichtung gemäß einem der Ansprüche 1 bis 4, dadurch gekennzeichnet, daß wenigstens eines der Wellenstücke einen Endabschnitt aufweist, der so gekrümmt ist, daß er zu dem Wellenstück, von dem er einen Teil bildet, parallel ist.

6. Verbindungseinrichtung gemäß einem der Ansprüche 1 bis 5, dadurch gekennzeichnet, daß jeder Flansch (7, 8) mit einer Öffnung (9, 10) versehen ist, in die der Endabschnitt (5, 6) des entsprechenden Wellenstückes eingreift, und daß jeder Flansch (7, 8) zwei seitliche Vorsprünge (13) aufweist, die eine Aussparung (14) für den Durchgang des Endabschnittes, an dem der andere Flansch (8, 7) befestigt ist, begrenzen.

7. Verbindungseinrichtung gemäß Anspruch 6, dadurch gekennzeichnet, daß die Verbindungsbolzen (15, 16) jeweils in einem seitlichen Vorsprung (13) eines jeden Flansches (7, 8) befestigt sind.

8. Verbindungseinrichtung gemäß einem der Ansprüche 1 bis 7, dadurch gekennzeichnet, daß wenigstens einer der Flansche (7, 8) schräg zu dem Endabschnitt (5, 6), an dem er befestigt ist, angebaut ist.

9. Verbindungseinrichtung gemäß einem der Ansprüche 1 bis 8, dadurch gekennzeichnet, daß die Verbindungsbolzen (15, 16) fest mit den Buchsen (19, 20) verbunden sind.

10. Lösbare Verbindungseinrichtung gemäß einem der Ansprüche 1 bis 9, dadurch gekennzeichnet, daß sie in einer Kraftfahrzeuglenksäule Verwendung findet.

## Claims

1. A separable connecting device between two coaxial shaft sections (12), which have two end portions (5, 6) displaced with respect to their common geometrical axis and which overlap, each of which carries a single flange (7, 8) fixed to its displaced end portion, the said flanges are identical and connected to one another by separable connecting pins (15, 16), characterized in that the flanges (7, 8) carry both connecting pins (15, 16) and complementary openings (17, 18), the latter being provided with sleeves (19, 20) made from a friction material and which serve to slidingly receive the connecting pins (15, 16) and in that the flanges (7, 8) are arranged in such a way that the connecting pins (15, 16) of one flange are engaged in the sleeves (19, 20) of opening (17, 18) of the other flange in order to produce a controlled sliding force.

2. Connecting device according to claim 1, characterized in that at least one of the displaced end portions (5, 6) is inclined to the common geometrical axis thereof and in that the flanges (7, 8) are fixed to the ends (5, 6) so as to be positioned obliquely with respect to the common geometrical axis.

3. Connecting device according to claims 1 or 2, characterized in that the sleeves (19, 20) are made from a rigid plastic material.

4. Connecting device according to claims 1 or 2, characterized in that the sleeves (19, 20) are made from an elastomer.

5. Connecting device according to one of the claims 1 to 4, characterized in that at least one of the shafts sections has an end portion bent so as to be parallel to the shaft portion of which it forms part.

6. Connecting device according to any one of the claims 1 to 5, characterized in that each flange (7, 8) is provided with an orifice (9, 10) in which is engaged the end portion (5, 6) of the corresponding shaft section and in that it has two lateral projections (13) defining between them a recess (14) for the passage of the end portion (5, 6) to which is fixed the other flange (8, 7).

7. Connecting device according to claim 6, characterized in that said connecting pins (15, 16) are in each case fixed in a lateral projection (13) of each flange (7, 8).

8. Connecting device according to one of the claims 1 to 7, characterized in that at least one of the flanges (7, 8) is mounted in an inclined manner on the end portion (5, 6) to which it is fixed.

9. Connecting device according to any one of the claims 1 to 8, characterized in that the connecting pins (15, 16) are tightly engaged in the sleeves (19, 20).

10. Application of the separable connecting device according to any one of the claims 1 to 9 to a motor vehicle steering column.

EP 0 203 845 B1

FIG.1

FIG.2

FIG.3